Europäisches Patentamt

European Patent Office

Office européen des brevets

(19)

(11) Veröffentlichungsnummer: **0 169 444**

**A2**

(12) **EUROPÄISCHE PATENTANMELDUNG**

(21) Anmeldenummer: 85108614.0

(22) Anmeldetag: 10.07.85

(51) Int. Cl.⁴: **G 01 B 11/30**

(30) Priorität: 27.07.84 DE 3427838

(43) Veröffentlichungstag der Anmeldung:
29.01.86 Patentblatt 86/5

(84) Benannte Vertragsstaaten:
AT BE CH DE FR GB IT LI LU NL SE

(71) Anmelder: Erwin Sick GmbH Optik-Elektronik
Sebastian-Kneipp-Strasse 1
D-7808 Waldkirch(DE)

(72) Erfinder: Weber, Klaus, Dr.
Baumgartenstrasse 2
D-7923 Königsbronn(DE)

(74) Vertreter: Dipl.-Phys.Dr. Manitz Dipl.-Ing., Dipl.-Wirtsch.
Finsterwald Dipl.-Chem.Dr. Heyn Dipl.-Phys. Rotermund
Morgan, B.Sc.(Phys)
Robert-Koch-Strasse 1
D-8000 München 22(DE)

(54) Rauheitssonde.

(57) Eine Rauheitssonde weist eine einen scharfgebündelten Lichtstrahl schräg auf die Oberfläche des zu untersuchenden Materials schickende, dort einen Primärlichtfleck (15) erzeugende Lichtquelle (10) und eine Lichtempfangsanordnung (14) für von der Oberfläche (13) gestreut reflektiertes Licht auf. In dem innerhalb der Streukeule (11) gestreuten Licht ist eine Retroreflexionsanordnung (12, 12') angebracht, die jeden auftreffenden Lichtstrahl zumindest annähernd in sich zurück zur Oberfläche (13) zurückwirft, derart, daß an dem Ort des Primärlichtflecks (15) oder unmittelbar daneben ein Sekundärlichtfleck (16) erzeugt wird. Die Lichtempfangsanordnung (14) empfängt im wesentlichen nur das von dem Sekundärlichtfleck (16) zurückgestreute Licht.

FIG.1

EP 0 169 444 A2

Die Erfindung betrifft eine Rauheitssonde für die Messung
der Rauheit von eine ausgeprägte Streukeule aufweisenden
Material mit einer einen scharfgebündelten Lichtstrahl
schräg auf die Oberfläche des zu untersuchenden Materials
schickenden, dort einen Primärlichtfleck erzeugenden Lichtquelle und einer Lichtempfangsanordnung für von der Oberfläche unter einem oder mehreren Winkeln rückgestreutes
Licht.

Bei der optischen Rauheitsmessung über die Streuindikatrix
eines z.B. von einem Laserlichtstrahl beaufschlagten Punktes
der Oberfläche des zu untersuchenden Materials wird die Winkelverteilung der gestreut reflektierten Strahlung entweder
sequentiell oder parallel erfaßt. Hierzu können entweder in
der Empfangsebene mehrere  Photoempfänger entlang einer Linie
in einer   senkrecht zur optischen Achse stehenden Fläche
angeordnet sein, oder es wird ein einzelner Photoempfänger
linear oder flächenmäßig durch das Streulicht hindurchgeführt. Bei beiden Meßmethoden wirkt sich eine innerhalb des
Meßzyklus auftretende Veränderung des Einfallswinkels wie
eine zusätzliche Aufstreuung des reflektierten Lichtstrahles
aus, verfälscht also das Meßergebnis. Die gleiche Verfälschung
wird bei der Messung an durchlaufendem Material durch Welligkeit der Oberfläche hervorgerufen, und zwar werden die Meßfehler in beiden Fällen umso gravierender, je schmaler die
Reflexionsindikatrix ist.

Derartige Rauheitssonden werden z.B. zur Rauheitskontrolle
von Feinblech am Ende einer Walzenstraße verwendet. Das Feinblech streut das empfangene scharfgebündelte Licht innerhalb
einer relativ engen Streukeule von beispielsweise 10 bis maximal 30$^{\circ}$.

0169444

Das Ziel der Erfindung besteht darin, eine Rauheitssonde der eingangs genannten Gattung zu schaffen, bei der sich Kippungen der Oberfläche relativ zum Einfallslichtstrahl während der Rauheitsmessungpraktisch nicht auswirken, so daß z.B. bei unter der Rauheitssonde durchlaufenden Materialbahnen, wie Feinblechen oder dergl. eine gewisse Welligkeit der Oberfläche sich nicht verfälschend auf das Meßergebnis, d.h. auf die Breite der von der Lichtempfangsanordnung gemessenen Streukeule auswirkt.

Zur Lösung dieser Aufgabe sieht die Erfindung vor, daß in dem innerhalb der Streukeule gestreuten Licht eine Retroreflexionsanordnung angeordnet ist, die jeden auftreffenden Lichtstrahl zumindest annähernd und eventuell geringfügig seitlich versetzt in sich zurück zur Oberfläche zurückwirft, derart, daß an der Stelle des Primärlichtfleckes oder unmittelbar daneben ein Sekundärlichtfleck erzeugt wird, und daß die Lichtempfangsanordnung im wesentlichennur das von dem Sekundärlichtfleck rückgestreute Licht empfängt.

Die Retroreflexionsanordnung muß dabei so dimensioniert werden, daß auch bei den vorkommenden Kippungen der Objektoberfläche gegen die Sonde stets derjenige Winkelbereich der primären Streukeule von ihr erfaßt wird, der zur Bildung des Winkelbereichs der sekundären Streukeule beiträgt, der von der Empfängeranordnung erfaßt wird. Die winkelmäßige Ausdehnung der Retroreflexionsanordnung hängt also von der Größe der zur Messung erfaßten sekundären Streukeule und von den zu erwartenden Kippungen der Materialbahn während der Messung, d.h. z.B. von der Welligkeit eines unter der Rauheitssonde hindurchlaufenden Feinblechs ab.

Aufgrund der erfindungsgemäßen Ausbildung wird das von der Retroreflexionsanordnung auf die Oberfläche der Materialbahn zurückgeworfene Licht stets unter einem solchen Winkel auf die Oberfläche auftreffen, daß das vom Sekundärlichtfleck gestreute Licht unabhängig von der Kippung der Oberfläche im wesentlichen in der gleichen Richtung ver-

- 3 -

0169444

läuft. Wird nun innerhalb des vom Sekundärlichtfleck gestreuten Lichtes die Lichtempfangsanordnung angebracht,
so ist das empfangene Streulicht und damit das von der
Lichtempfangsanordnung gebildete elektrische Signal bzw.
die empfangene Signalvielfalt unabhängig von den Kippungen der Oberfläche relativ zum Sendelichtstrahl.

Nach einer ersten Ausführungsform ist vorgesehen, daß die
Retroreflexionsanordnung das auftreffende Licht exakt in
sich an den Ort des Primärlichtflecks zurückwirft und im
Sendestrahl ein teildurchlässiger Spiegel angeordnet ist,
der das vom Sekundärlichtfleck gestreute Licht zur Lichtempfangsanordnung auslenkt. Bei dieser Ausführungsform werden Kippungen der Oberfläche des Materials am genauesten
kompensiert, weil der Primär- und der Sekundärlichtfleck
sich genau an derselben Stelle befindet. Allerdings erfordert diese Ausführungsform einen Teilerspiegel innerhalb
des Sendestrahls, wodurch eine Lichtschwächung entsteht.

Bei dieser Ausführungsform kann die Retroreflexionsanordnung
im einfachsten Fall ein Retroreflektor wie ein Tripelspiegel
oder eine Tripelspiegelanordnung ohne Zwischenräume sein,
welche jedoch optische Qualität   haben sollte.

Eine größere Lichtstärke im Empfangssignal kann mit einer
weiteren Ausführungsform erzielt werden, bei der die Retroreflexionsanordnung das auftreffende Licht unter einem geringfügig
veränderten Winkel zur Oberfläche zurückreflektiert und die Lichtempfangsanordnung neben dem Sendelichtstrahl angeordnet ist.
Die Winkeländerung   soll dabei so klein sein, daß der Sekundärlichtfleck so nahe wie möglich am Primärlichtfleck entworfen wird. Voraussetzung für eine einwandfreie Funktion dieser
Ausführungsform ist, daß bei einer Kippung oder Welligkeit der
Oberfläche des Materials der Kipp- bzw. Welligkeitswinkel am
Ort des Sekundär- und des Primärlichtflecks im wesentlichen
der gleiche ist.

Aufgrund der beschriebenen geringen Winkeländerung kann eine geometrische Trennung von Sende- und Empfangslicht herbeigeführt werden, so daß hier ein teildurchlässiger Spiegel im
Sendestrahl entbehrlich ist.

Bei der letztgenannten Ausführungsform kommt ein Retroreflektor als Retroreflexionsanordnung nicht in Betracht.

Bei allen Ausführungsformen kann die Retroreflexionsanordnung ein sphärischer Hohlspiegel sein, dessen Mittelpunkt
sich an der Stelle des Primärlichtflecks bzw. zwischen dem
Primärlichtfleck und dem Sekundärlichtfleck befindet.

Weiter ist es möglich, daß die Retroreflexionsanordnung
eine Linse und einen dahinter angeordneten, senkrecht zur
optischen Achse stehenden Planspiegel umfaßt, wobei der
Brennpunkt der Linse sich an der Stelle des Primärlichtflecks bzw. zwischen dem Primärlichtfleck und dem Sekundärlichtfleck befindet.

Bei einer Sonde zur Rauheitsmessung an durchlaufenden Feinblechen kann der Einfallswinkel des Sendelichtstrahlts relativ zur Oberfläche des zu untersuchenden Materials 5 bis $10^{\mathrm{o}}$
betragen, um einen freien Arbeitsabstand der Rauheitssonde
von etwa 300 mm bei kompaktem Aufbau zu erreichen. Der Hohlspiegel hat dann einen Radius von etwa 400 mm.

Bei einer Sonde für die Rauheitsmessung an Werkstücken, bei
denen naturgemäß ein kleinerer Arbeitsabstand, ja in vielen
Fällen sogar das Aufsetzen auf die Oberfläche erlaubt ist,
können Hohlspiegel von beispielsweise 10 mm bis 50 mm Radius
als Retroreflexionseinrichtung verwendet werden.

Bei allen Ausführungsformen kann zusätzlich die Möglichkeit
vorgesehen werden, auf das Erfassen der primären Streukeule
umzuschalten. Das geschieht am einfachsten durch einschaltbare Spiegel, welche diese primäre Streukeule statt auf den
Retroreflektor direkt auf die Empfängeranordnung umlenken.
Diese Schaltmöglichkeit zwischen primärer und sekundärer
Streukeule ist vor allem für universelle Laborgeräte nach
der Erfindung von Interesse.


Die Erfindung wird im folgenden beispielsweise anhand der
Zeichnung beschrieben; in dieser zeigt:


Fig. 1    in schematischer Ansicht eine erste Ausführungsform einer erfindungsgemäßen Rauheitssonde mit
          einem sphärischen Hohlspiegel als Retroreflexionsanordnung,


Fig. 2    eine ähnliche Ausführungsform wie Fig. 1, jedoch
          mit einer Linse und einem Planspiegel als Retroreflexionsanordnung,


Fig. 3    eine weitere Abwandlung des Ausführungsbeispiels
          nach Fig. 1 mit einer Tripelspiegelanordnung als
          Retroreflexionsanordnung,


Fig. 4    eine weitere vorteilhafte Ausführungsform der erfindungsgemäßen Rauheitssonde mit geometrischer
          Strahlteilung,


Fig. 5    eine zu der nach Fig. 4 ähnliche Anordnung mit vier
          nacheinander erzeugten Lichtflecken, und


Fig. 6    eine weitere Ausführungsform mit einem speziellen
          Retroreflektor zur Erzeugung zweier nebeneinanderliegender Lichtflecke.

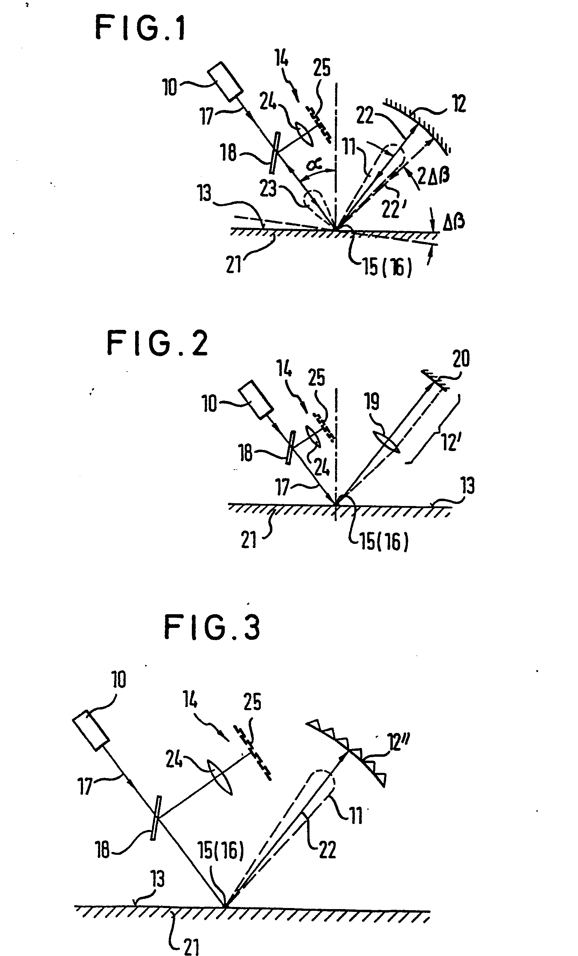

Nach Fig. 1 schickt ein Laser 10 unter einem Einfallswinkel $\alpha$ einen scharfgebündelten Sendelichtstrahl 17 auf die Oberfläche 13 eines bezüglich seiner Oberflächenrauhigkeit zu untersuchenden Materials 21. Der gewählte Einfallswinkel $\alpha$ richtet sich danach, wie breit die Streukeulen sind; er wird genügend groß gewählt, um eine Überlappung von primärer und sekundärer Keule zu vermeiden. Wie durch eine gestrichelte Linie angedeutet ist, kann die Oberfläche 13 während der Messung um einen Winkel $\Delta\beta$ gekippt werden, was sich bei der Rauheitsmessung jedoch nicht auswirken soll.

Der Sendelichtstrahl erzeugt auf der Oberfläche 13 einen Primärlichtfleck 15, von dem das auftreffende Licht innerhalb der Streukeule 11 in Richtung auf eine Retroreflexionsanordnung 12 gestreut wird. Der Mittelstrahl der Streukeule ist mit 22 bezeichnet. Dieser Strahl 22 fällt bei in normaler Lage befindlicher Oberfläche 13 auf die Mitte der als sphärischer Hohlspiegel ausgebildeten Retroreflexionsanordnung 12. Der Krümmungs-Mittelpunkt

des sphärischen Hohlspiegels 12 befindet sich am Orte des Primärlichtfleckes 15.

Wird die Oberfläche 13 um den Winkel $\triangle\beta$ in die gestrichelt angedeutete Lage gekippt, so verschiebt sich der Mittelstrahl 22 der Streukeule 11 um einen Winkel $2.\triangle\beta$ in die Position 22', in der er ebenso wie die Seitenstrahlen der Streukeule 11 noch vollständig auf den sphärischen Hohlspiegel 12 auftreffen soll.

Jeder von dem Hohlspiegel 12 reflektierte Lichtstrahl wird exakt in sich zurück an die Stelle des Primärlichtfleckes 15 zurückgeworfen, wodurch an dieser Stelle zusätzlich ein Sekundärlichtfleck 16 erzeugt wird, der dem Primärlichtfleck 15 vollständig überlagert ist. Das Licht des Sekundärlichtfleckes 16 wird nun innerhalb einer Sekundärstreukeule 23 im wesentlichen in Richtung des Sendestrahls 17 gestreut, wobei die Lage der Sekundärstreukeule 23 aufgrund der erfindungsgemäßen Anordnung des sphärischen Hohlspiegels 12 unabhängig vom Kippwinkel $\angle$ der Oberfläche 13 ist.

Innerhalb des Sendelichtstrahls 17 ist ein teildurchlässiger Spiegel 18 angeordnet, welcher das empfangene Streulicht der Sekundärstreukeule 23 zu einer Lichtempfangsanordnung 14 umlenkt, die aus einer Linse 24 und einer Photodiodenanordnung 25 besteht. Die Diodenanordnung 25 ist an eine nicht dargestellte elektronische Auswerteschaltung angeschlossen.

Die beschriebene Rauheitssonde arbeitet ausschließlich mit dem vom Sekundärlichtfleck 16 in die Sekundärstreukeule 23 zurückgestreuten Licht. Die Rauheitssonde eignet sich nur für solches Material, bei dem die Primärstreukeule 11 und die Sekundärstreukeule 23 so, wie das in Fig. 1 dargestellt ist, entkoppelt werden können und sich nicht wesentlich überlappen. Das wird dadurch erreicht, daß der Einfallswinkel $\alpha$ genügend groß gewählt wird, um eine Überlappung mit der primären Streukeule zu vermeiden.

0169444

Bei Materialien mit sehr breiten Streukeulen ist ohnehin die Störung durch kleine Winkeländerungen $\Delta\beta$ genügend gering, so daß man mit dem Erfassen der primären Reflexionskeule die Rauheit ermitteln kann.

In den folgenden Figuren bezeichnen gleiche Bezugszahlen entsprechende Teile wie in Fig. 1.

Bei der Ausführungsform nach Fig. 2 besteht die Retroreflexionsanordnung 12' aus einer Linse 19, deren Brennpunkt sich am Ort des Primärlichtflecks 15 befindet. Hinter der Linse 19 ist ein Planspiegel 20 angeordnet, dessen Ebene senkrecht auf der optischen Achse der Linse 19 steht. Der Abstand des Planspiegels 20 von der Linse 19 entspricht ebenfalls deren Brennweite.

Die Apertur der Linse 19 und des Planspiegels 20 müssen so sein, daß bei allen vorkommenden Kippungen der Oberfläche 13 das gesamte Streulicht noch von der Linse 19 und dem Planspiegel 20 erfaßt wird.

Bei der Ausführungsform nach Fig. 3 besteht die Retroreflexionsanordnung 12" aus einer Tripelspiegelanordnung, die senkrecht zu dem bei normaler Lage der Oberfläche 13 vorhandenen Mittelstrahl 22 der Streukeule 11 angeordnet ist.

Die Arbeitsweise der Ausführungsformen nach den Fig. 1 bis 3 ist die gleiche.

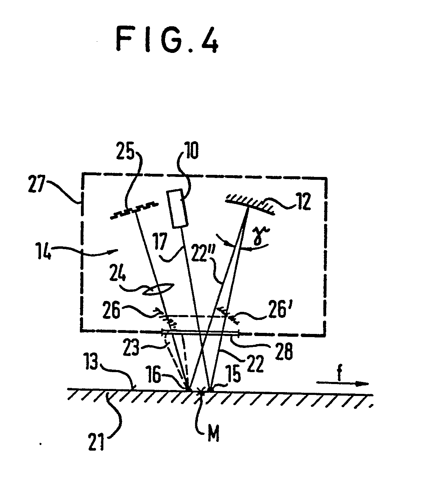

Bei dem Ausführungsbeispiel nach Fig. 4 ist der die Retroreflexionsanordnung bildende Hohlspiegel 12 relativ zum normalen Mittelstrahl 22 des Streulichts derart geringfügig gekippt, daß das reflektierte Licht 22" einen kleinen Winkel $\gamma$ mit dem Strahl 22 einschließt. Auf diese Weise wird der Sekundärlichtfleck 16 neben dem Primärlichtfleck 15 entworfen, wobei der Mittelpunkt des sphärischen Hohlspiegels 12 genau zwischen den Lichtflecken 15, 16 zu liegen kommt. Aufgrund dieser Ausbildung liegt die Sekundärstreukeule 23 neben dem Sendelichtstrahl 17, so daß ohne die Anordnung eines teildurchlässigen Spiegels das Streulicht direkt von der Lichtempfangsanordnung 14 aufgenommen werden kann.

Bei einer kontinuierlichen Rauheitsmessung z.B. innerhalb eines Walzwerkes wird das Material 21 z.B. in Richtung des Pfeiles f in Fig. 4 kontinuierlich unter der Rauheitssonde hindurchbewegt.

In Fig. 4 ist auch ein Paar von Umlenkspiegeln 26, 26' gestrichelt angedeutet, welches das Primär-Streulicht auf die Photoempfängeranordnung 25 umlenken kann: so kann wahlweise auch die primäre Streukeule erfaßt werden, wenn z.B. das Material zu breit streut. Die erfindungsgemäße Oberflächenkippkompensation erfolgt bei einer derartigen Messung mit eingeklapptem Umlenkspiegel 26 allerdings nicht.

Die gesamte Rauheitssonde gemäß der Erfindung kann gemäß Fig. 4 bequem in einem gestrichelt angedeuteten Gehäuse 27 kompakt untergebracht werden, welches an seiner Unterseite ein geeignetes Fenster 28 für den Lichtaus- bzw. -einlaß aufweist.

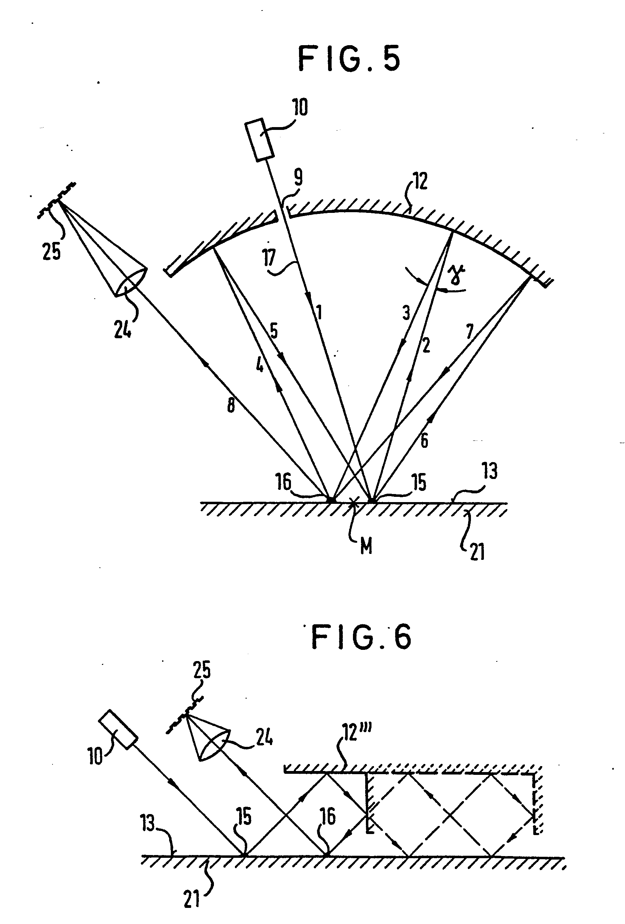

Fig. 5 zeigt ein ähnliches Ausführungsbeispiel wie Fig. 4, wobei jedoch der Hohlspiegel 12 eine wesentlich größere Öffnung hat, so daß er sich auch noch über den Sendelichtstrahl 17 hinaus erstreckt. Damit dieser die Oberfläche 13 des Materials 21 erreichen kann, ist im Hohlspiegel 12 an geeigneter Stelle eine Bohrung 9 vorgesehen.

Der Sendelichtstrahl 17 erzeugt zunächst den Primärlichtfleck 15 und wird als Streukeule mit dem Mittelstrahl 2 zum Hohlspiegel 12 reflektiert, wo eine erneute Reflexion zum Lichtstrahl 3 führt, der den Sekundärlichtfleck 16 erzeugt. Das vom Sekundärlichtfleck 16 ausgehende Licht mit dem Mittelstrahl 4 erreicht den Hohlspiegel 12 ebenfalls, weil dieser eine entsprechend große Öffnung aufweist. Das nunmehr zurückreflektierte Licht mit dem Mittelstrahl 5 fällt wieder schwerpunktmäßig genau auf den Primärlichtfleck 15 und erzeugt dort einen Tertiärlichtfleck, dessen Licht mit dem Mittelstrahl 6 wieder auf den Hohlspiegel 12, und zwar in der Nähe von dessen Rand auffällt. Der reflektierte Mittelstrahl 7 gelangt wieder auf den Sekundärlichtfleck 16 und erzeugt dort einen Quartärlichtfleck, von dem erneut eine inzwischen vierfach aufgeweitete geschwächte Streukeule mit dem Mittelstrahl 8 ausgeht, die am Hohlspiegel 12 vorbei zur Linse 24 gelangt, welche das Empfangslicht auf der Empfangsanordnung 25 konzentriert.

Die Empfangsanordnung 25 besteht aus einer Reihe zeilenförmig angeordneter Empfänger, deren Verbindungslinie senkrecht zur Verbindungslinie der beiden Lichtflecke 15,16 verläuft, so daß die Darstellung der Empfangsanordnung 25 in den Fig. 4 und 5 gegenüber den tatsächlichen Verhältnissen um 90° gegenüber der optischen Achse verdreht ist, um die Reihe von Einzelempfängern anschaulich darstellen zu können.

Diese Anordnung der Photoempfänger ist deswegen vorteilhaft, weil in dieser Richtung Störungen durch Winkelveränderungen voll kompensiert sind. Allerdings ist auch bei der Anordnung der Reihe von Photoempfängern in der Zeichenebene in erster Näherung diese Kompensation wirksam, so daß schmale Streukeulen simultan in zwei zueinander senkrechten Schnitten erfaßt werden können. Hierzu wäre dann eine flächige Matrixanordnung von einzelnen Photoempfängern als Empfangsanordnung 25 zweckmäßig.

Naturgemäß ist eine solche Sonde mit Vielfachaufweitung der Streukeule nur verwendbar zur Erfassung und Unterscheidung sehr schmaler Streukeulen, also zur Untersuchung von geläppten oder polierten Oberflächen auf restliche Rauheitsanteile.

Die erfindungsgemäße Rauheitsssonde bietet also allgemein
weiter den Vorteil, daß die Streukeulen durch die doppelte oder
nehrfache Aufstreuung stärker differenziert werden, was z.B.
zur Fertigungsüberwachung bei gleichbleibenden Fertigungsabläufen vorteilhaft ist.

Bei der Ausführungsform nach Fig. 6 wird die Retroreflexionsanordnung 12"' durch einen Dachkantspiegel mit rechtwinklig
zueinander angeordneten Spiegelflächen gebildet, wodurch das
von dem Primärlichtfleck 15 reflektierte Licht zwar im wesentlichen in sich zurück, jedoch seitlich parallel versetzt, zur
Oberfläche 13 des Materials 21 zurückgeführt wird, wo es den
Sekundärlichtfleck 16 erzeugt, dessen Licht über die Linse
24 wieder zur Empfangsanordnung 25 gelenkt wird. Durch die
in gestrichelten Linien angedeutete Verlängerung der oberen, parallel zur Oberfläche 13 angeordneten Spiegelfläche
der Retroreflexionsanordnung 12"' können auch mehrere Hin-
und Herreflexionen und somit mehrere, nebeneinanderliegende
Lichtflecke auf der Oberfläche 13 des Materials 21 realisiert werden. Allerdings kompensiert diese Ausführungsform der Rauheitssonde nur in einer Kipprichtung.

**0169444**

Patentansprüche

1. Rauheitssonde für die Messung der Rauheit von eine ausgeprägte Streukeule aufweisenden Material mit einer einen
scharfgebündelten Lichtstrahl schräg auf die Oberfläche
des zu untersuchenden Materials schickenden, dort einen
Primärlichtfleck erzeugenden Lichtquelle und einer Lichtempfangsanordnung für von der Oberfläche unter einem oder
mehreren Winkeln rückgestreutes Licht, dadurch g e k e n n -
z e i c h n e t , daß in dem innerhalb der Streukeule (11)
gestreuten Licht eine Retroreflexionsanordnung (12,12',12",12"')
angeordnet ist, die jeden auftreffenden Lichtstrahl zumindest annähernd und eventuell geringfügig seitlich versetzt
in sich zurück zur Oberfläche (13) zurückwirft, derart, daß
an der Stelle des Primärlichtfleckes (15) oder unmittelbar
daneben ein Sekundärlichtfleck (16) erzeugt wird, und daß
die Lichtempfangsanordnung (14) im wesentlichen nur das von
dem Sekundärlichtfleck (16) rückgestreute Licht empfängt.

2. Rauheitssonde nach Anspruch 1, dadurch  g e k e n n -
z e i c h n e t ,  daß die Retroreflexionsanordnung
(12,12',12") das auftreffende Licht exakt in sich an
den Ort des Primärlichtflecks (15) zurückwirft und
im Sendestrahl (17) ein teildurchlässiger Spiegel (18)
angeordnet ist, der das vom Sekundärlichtfleck (16) gestreute Licht zur Lichtempfangsanordnung (14) auslenkt.

3. Rauheitssonde nach Anspruch 2, dadurch  g e k e n n -
z e i c h n e t ,  daß die Retroreflexionsanordnung
(12,12',12") ein Retroreflektor (12") ist.

4. Rauheitssonde nach Anspruch 1, dadurch  g e k e n n -
z e i c h n e t,  daß die Retroreflexionsanordnung
(12,12') das auftreffende Licht um einen kleinen Winkel
($\delta$) geändert zur Oberfläche (13) zurückreflektiert und
die Lichtempfangsanordnung (14) neben dem Sendelichtstrahl (17) angeordnet ist.

5. Rauheitssonde nach Anspruch 4, dadurch  g e k e n n -
z e i c h n e t ,  daß die Retroreflexionsanordnung
(12,12') eine solche Öffnung hat, daß das vom Sekundärlichtfleck (16) reflektierte Licht nochmals oder
noch mehrmals auf die Retroreflexionseinrichtung
(12, 12') fällt und von dort erneut zum Primärlichtfleck (15) reflektiert oder wechselweise zum
Primärlichtfleck (15) und Sekundärlichtfleck (16)
reflektiert wird, um schließlich vom letzterzeugten Lichtfleck auf die Empfängeranordnung (25) zu
gelangen.

6. Rauheitssonde nach einem der vorhergehenden Ansprüche, dadurch g e k e n n z e i c h n e t , daß die Retro-reflexionsanordnung ein sphärischer Hohlspiegel (12) ist, dessen Mittelpunkt sich an der Stelle des Primärlichtflecks (15) bzw. zwischen dem Primärlichtfleck (15) und dem Sekundärlichtfleck (16) befindet.

7. Rauheitssonde nach einem der Ansprüche 1 bis 6, dadurch g e k e n n z e i c h n e t , daß die Retroreflexions-anordnung eine Linse (19) und einen dahinter angeordneten, senkrecht zur optischen Achse stehenden Planspiegel (20) umfaßt, wobei der Brennpunkt der Linse (19) sich an der Stelle des Primärlichtflecks (15) bzw. zwischen dem Primärlichtfleck (15) und dem Sekundärlichtfleck (16) befindet.

8. Rauheitssonde nach einem der Ansprüche 1 bis 8, dadurch g e k e n n z e i c h n e t , daß Schaltspiegel (26,26') vorgesehen sind, mit denen die Streukeule des Primärlicht-flecks direkt auf die Empfängeranordnung (25) gelenkt wer-den kann.

## FIG.1

## FIG.2

## FIG.3

FIG.4

# FIG.5

# FIG.6